# EUROPEAN PATENT SPECIFICATION

(11) **EP 4 414 254 B1**
(45) Date of publication and mention of the grant of the patent: **01.10.2025**
(21) Application number: 23184418.4
(22) Date of filing: 10.07.2023
(51) Int. Cl.: B62J 27/00, B62M 6/50, B62M 19/00

(54) **SAFE START CONTROL DEVICE FOR CHAINLESS ELECTRIC BICYCLE AND CONTROL METHOD THEREFOR**
VORRICHTUNG ZUR SICHEREN STARTSTEUERUNG FÜR EIN KETTENLOSES ELEKTRISCHES FAHRRAD UND STEUERUNGSVERFAHREN DAFÜR
DISPOSITIF DE COMMANDE DE DÉMARRAGE SÉCURISÉ POUR BICYCLETTE ÉLECTRIQUE SANS CHAÎNE ET SON PROCÉDÉ DE COMMANDE

(30) Priority: 08.02.2023 KR 20230016638
(43) Date of publication of application: 14.08.2024
(73) Proprietor: HL Mando Corporation, Pyeongtaek-si, Gyeonggi-do 17962 (KR)
(72) Inventor: PARK, Kitae, 14595 Bucheon-si, Gyeonggi-do (KR)
(74) Representative: BCKIP Part mbB

(56) References cited:
- EP-A1- 3 168 123
- KR-A- 20140 038 054
- US-B2- 11 225 301

## Description

### CROSS-REFERENCE TO RELATED APPLICATIONS

This application claims priority to Korean Patent Application No. 10-2023-0016638, filed on Feb 08, 2023, in the Korean Intellectual Property Office (KIPO),.

### TECHNICAL FIELD

The present invention relates to a safe start control device for a chainless electric bicycle and a control method therefor, and in particular, a safe start control device for a chainless electric bicycle and a control method therefor capable of promoting rider's safety by preventing an unintended start state even when a pedal input is inadvertently generated due to a rider's repetitive getting on and off operation in a drivable state where power of a chainless electric bicycle for delivery is turned on.

### BACKGROUND

An electric bicycle turns a motor with electricity to assist a person or to drive a bicycle. A method in which the power of a motor is used to assist a person stepping on a pedal to drive wheels is called a pedal assistance system (PAS) method, and a method in which a pedal and a drive motor are only electronically connected therebetween without chain connection is called a series hybrid method. As compared to the PAS method, the hybrid method can be controlled in various ways by software, so a motor of an electric bicycle can be driven with much less pedal force than the PAS method.

Since there is no chain between the motor and the pedal, it is possible to configure various electric bicycles, such as a 2-wheeled electric bicycle, a 3-wheeled electric bicycle and a 4-wheeled electric bicycle, without physical limitations due to chain connection. Further, there is no need to maintain a chain.

In order to apply the chainless electric bicycles, instead of vehicles, to an application for delivery, technologies for four-wheeled chainless electric bicycles are being developed.

Chainless electric bicycles for delivery can move the bicycle even when carrying a heavy load of 100 kg or more, and have an advantage of being able to start and move easily with just the rider's pedal input.

This is because an electronic control system inside the chainless electric bicycle can drive the motor with energy stored in a battery regardless of the strength of the rider's legs when an input to a generator connected to the rider's pedal is received only as an electrical signal.

In particular, in the case where a chainless electric bicycle is used for delivery, there may occur the hassle of turning off and on the bicycle each time a rider delivers luggage in the middle of delivery. Accordingly, if the rider gets off the bicycle for a short period of time and then has to get on the bicycle, it is highly likely for the rider to get on the chainless electric bicycle while the power is on.

In this situation, if the rider steps up on the pedal of the powered-on electric bicycle without holding the brake while the bicycle is loaded with a heavy load of 100 kg or more, an input to the generator connected to the rider's pedal may cause a sudden start of the heavy bicycle, contrary to the intention of the rider, thereby causing a safety problem

US 11 225 301 B2 discloses the following features of claim 1; a safe start control device for an electric bicycle comprising: a wheel sensor configured to detect a speed of a drive wheel; a drive controller, a driving mode changeover input unit configured to receive a driving standby mode release signal from a rider in the driving standby mode state, wherein the drive controller is configured to switch to a drivable mode state when the driving standby mode release signal is input to the driving mode changeover input unit.

US 11 225 301 B2 discloses the following features of claim 5; a safe start control device for an electric bicycle, comprising: a wheel sensor configured to detect a speed of a drive wheel; a drive controller; and a communication module configured to be linked with a mobile terminal of a rider and to receive a driving standby mode release signal from the rider, wherein the drive controller is configured to switch to a drivable mode state when the driving standby mode release signal is received by the communication module.

US 11 225 301 B2 discloses the following features of claim 9; a safe start control method for an electric bicycle that includes a drive device being in a powered-on and drivable state, the method comprising: detecting, by a wheel sensor, a speed of a drive wheel of the electric bicycle; and switching to a drivable mode state when a driving standby mode release signal is received from a rider in the driving standby mode state by the drive controller.

US 11 225 301 B2 discloses the following features of claim 13; a safe start control method for an electric bicycle that includes in a drive device being in a powered-on and drivable state, the method comprising: detecting, by a wheel sensor, a speed of a drive wheel of the electric bicycle; switching to a drivable mode state when a mobile terminal of a rider and a communication module are linked with each other and a driving standby mode release signal is received from the rider.

### SUMMARY

In view of the background discussed above, the present invention provides a safe start control device for a chainless electric bicycle in accordance with claim 1, a safe start control device for a chainless electric bicycle in accordance with claim 5, a method in accordance with claim 9, and a method in accordance with claim 13.

According to a first aspect of the present invention, a safe start control device for a chainless electric bicycle includes a wheel sensor configured to detect a speed of a drive wheel; a drive controller configured to determine that the drive wheel is in a stopped state if the detected speed of the drive wheel satisfies a preset reference value, to initialize a stop timer, and to switch to a driving standby mode state when a preset stop timer time elapses; and a driving mode changeover input unit configured to receive a driving standby mode release signal from a rider in the driving standby mode state, in which the drive controller is configured to switch to a drivable mode state when the driving standby mode release signal is input to the driving mode changeover input unit.

In an exemplary embodiment, in particular, the driving mode changeover input unit is configured by a brake lever or a mode changeover switch.

In an exemplary embodiment, in particular, when the brake lever is operated, e.g., pressed or pulled, for a preset time or longer, the drive controller is switched to the drivable mode state.

In an exemplary embodiment, in particular, when a driving standby mode release state is input to the mode changeover switch, the drive controller is switched to the drivable mode state.

In an exemplary embodiment, in particular, the drive controller is configured to control the drive wheel not to be driven when a pedal input is applied in the driving standby mode state. For example, the drive controller may control a motor coupled to the drive wheel to be prevented from outputting torque to the drive wheel in the driving standby mode state.

In an exemplary embodiment, in particular, the drive controller is configured, when the detected speed of the drive wheel satisfies a value of 0 Km/h, to determine that the drive wheel is in a stopped state.

According to a second aspect of the present invention, a safe start control device for a chainless electric bicycle includes a wheel sensor configured to detect a speed of a drive wheel; a drive controller configured to determine that the drive wheel is in a stopped state if the detected speed of the drive wheel satisfies a preset reference value, to initialize a stop timer, and to switch to a driving standby mode state when a preset stop timer time elapses; and a communication module configured to be linked with a mobile terminal of a rider and to receive a driving standby mode release signal from the rider, in which the drive controller is configured to switch to a drivable mode state when the driving standby mode release signal is received by the communication module.

In an exemplary embodiment, in particular, , the communication module may be configured to establish a signal communication with the mobile terminal of the rider when the mobile terminal comes close to the communication module within a predetermined distance range, so that the mobile terminal and the communication module are linked with each other, and hwerein the drive controller is configured to switch to a drivable mode state input to the mobile terminal of the rider upon linking of the communication module with the mobile terminal. For example, a driving mode changeover control application may be installed on the mobile terminal of the rider. The application may be configured to receive an input from the rider indicating that switching to the drivable mode state is desired. The input causes the mobile terminal to issue a switching signal which is received by the communication module linked with the mobile terminal.

In an exemplary embodiment, in particular, the drive controller is configured to control the drive wheel not to be driven when a pedal input is applied in the driving standby mode state. For example, the drive controller may control a motor coupled to the drive wheel to be prevented from outputting torque to the drive wheel in the driving standby mode state.

In an exemplary embodiment, in particular, the communication module uses, a Bluetooth module, a Wifi module, a Jigbee module, a UWB module, a Cellular communication module, or an NFC module.

In an exemplary embodiment, in particular, the drive controller is configured, when the detected speed of the drive wheel satisfies a value of 0 Km/h, to determine that the drive wheel is in a stopped state.

According to a third aspect of the present invention, a safe start control method for a chainless electric bicycle, that includes a drive device of the chainless electric bicycle being in a powered-on and drivable state, includes detecting, by a wheel sensor, a speed of a drive wheel; determining, by a drive controller, whether the drive wheel is in a stopped state by comparing the detected speed of the drive wheel with a preset reference value; initializing, by the drive controller, a stop timer if it is determined that the drive wheel is in the stopped state; switching to a driving standby mode state when a preset stop timer time elapses after the initialization by the drive controller; and switching to a drivable mode state when a driving standby mode release signal is received from a rider in the driving standby mode state. The method of this aspect of the invention, for example, may be carried out using the device of the first aspect of the invention.

In an exemplary embodiment, in particular, in the switching to the drivable mode state, the driving standby mode release signal is received from a brake lever or a mode changeover switch.

In an exemplary embodiment, in particular, when the brake lever is operated, e.g., pulled or pressed, for a preset time or longer, the switching to the drivable mode state is performed.

In an exemplary embodiment, in particular, when a driving standby mode release is selected and input to the mode changeover switch, the switching to the drivable mode state is performed.

In an exemplary embodiment, in particular, the drive controller is configured to control the drive wheel not to be driven when a pedal input is applied in the driving standby mode state. For example, the drive controller may control a motor coupled to the drive wheel to be prevented from outputting torque to the drive wheel in the driving standby mode state.

In an exemplary embodiment, in particular, in the determination as to whether the drive wheel is in the stopped state, when the detected speed of the drive wheel satisfies a value of 0 Km/h, the drive wheel is determined as being in the stopped state.

According to a fourth aspect of the present invention a safe start control method for a chainless electric bicycle, that includes a drive device being in a powered-on and drivable state, includes detecting, by a wheel sensor, a speed of a drive wheel; determining, by a drive controller, whether the drive wheel is in a stopped state by comparing the detected speed of the drive wheel with a preset reference value; initializing, by the drive controller, a stop timer if it is determined that the drive wheel is in the stopped state; switching to a driving standby mode state when a preset stop timer time elapses after the initialization by the drive controller; and switching to a drivable mode state when a mobile terminal of a rider and a communication module are linked with each other and a driving standby mode release signal is received from the rider. The method of this aspect of the invention, for example, may be carried out using the device of the second aspect of the invention.

In an exemplary embodiment, in particular, when the mobile terminal comes close to the communication module within a predetermined distance range, the communication module establishes a signal communication with the mobile terminal, so that the mobile terminal and the communication module are linked with each other, and wherein the switching to the drivable mode state input to the mobile terminal of the rider is made upon linking of the communication module with the mobile terminal.

In an exemplary embodiment, in particular, the drive controller is configured to control the drive wheel not to be driven when a pedal input is applied in the driving standby mode state.

In an exemplary embodiment, in particular, the communication module uses a Bluetooth module, a Wifi module, a Jigbee module, a UWB module, a Cellular communication module, or an NFC module.

In an exemplary embodiment, in particular, in the determination as to whether the drive wheel is in a stopped state, when the detected speed of the drive wheel satisfies a value of 0 Km/h, the drive wheel is determined as being in a stopped state.

According to the present invention, a drive controller is enabled to be switched to a driving standby mode when it is detected that a drive wheel is in a stopped state for a predetermined time. The drive controller, according to the invention, is switched from the driving standby mode to a drivable mode state a driving standby upon receiving mode release signal. This mode release signal, according to one alternative of the invention, is input via a driving mode changeover input unit. According to another alternative of the invention, the driving standby mode release signal is received from an external source, e.g., from a mobile terminal, via a communication module.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

FIG. 1 is a diagram schematically showing an overall configuration of a chainless electric bicycle according to an exemplary embodiment of the present invention.
FIG. 2 is a diagram schematically showing a configuration of a safety start control device for a chainless electric bicycle according to a first exemplary embodiment of the present invention.
FIG. 3 is a diagram schematically showing a configuration of a safety start control device for a chainless electric bicycle according to a second exemplary embodiment of the present invention.
FIG. 4 is a diagram schematically showing a configuration of a safety start control device for a chainless electric bicycle according to a third exemplary embodiment of the present invention.
FIG. 5 is a flowchart of a safe start control method for a chainless electric bicycle according to the first exemplary embodiment of the present invention.
FIG. 6 is a flowchart of a safe start control method for a chainless electric bicycle according to the second exemplary embodiment of the present invention.

### DETAILED DESCRIPTION

Hereinafter, embodiments of the present invention will be described in detail with reference to the accompanying drawings so that those skilled in the art can easily practice the present invention. However, the present invention may be embodied in many different forms and is not limited to the embodiments described herein. In order to clearly describe the present invention, parts irrelevant to the description are omitted in the drawings, and like reference numerals are given to like parts throughout the specification. In addition, while describing with reference to the drawings, even when the configurations are indicated by the same name, the reference numerals may vary depending on the drawings, and the reference numerals are provided only for convenience of description, and the concept, characteristic, function, or the effect of each component is not to be construed as being limited by the corresponding reference numeral.

Throughout the specification, when it is described that a part is "connected" to another part, this includes not only the case of being "directly connected" but also the case of being "electrically connected" with another element therebetween. In addition, when it is described that a part "includes" another component, it means that the part may further include other components, not excluding other components unless otherwise stated, and it should be understood that the presence or addition of one or more other features, numbers, steps, operations, components, parts, or combinations thereof are not precluded.

In this specification, 'unit' or 'module' includes a unit realized by hardware or software, or a unit realized by using both the hardware and the software, and one unit may be realized by using two or more hardware, or two or more units may be realized by one hardware.

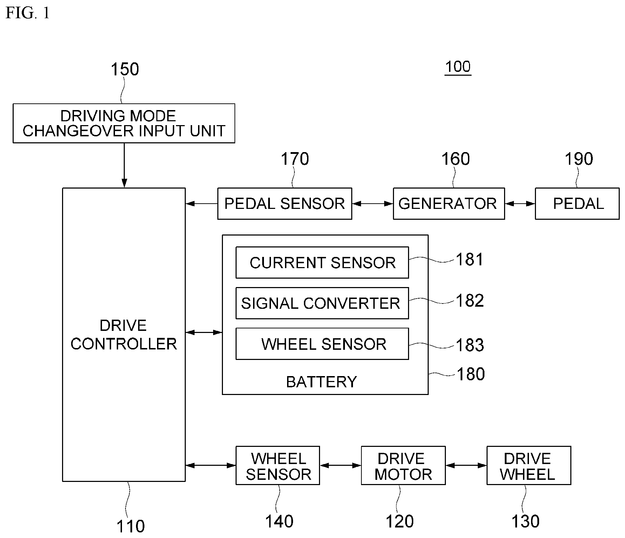

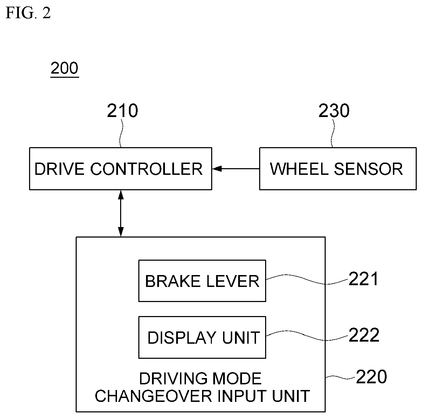

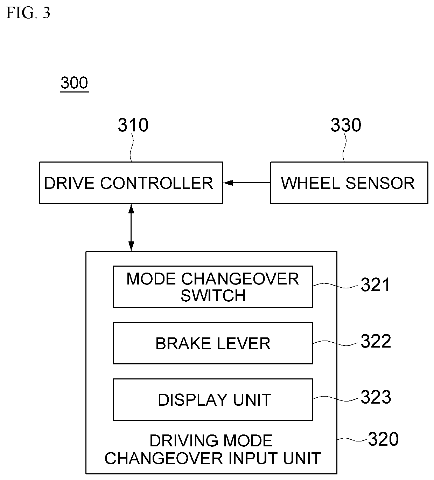

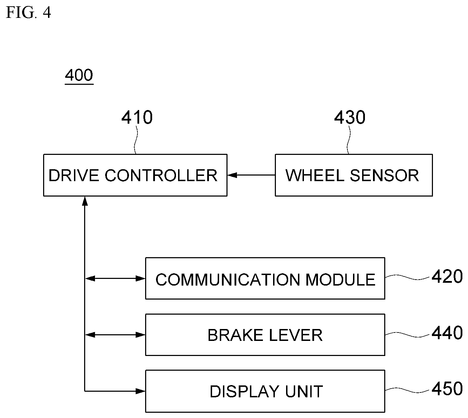

FIG. 1 is a diagram schematically showing an overall configuration of a chainless electric bicycle according to an exemplary embodiment of the present invention, FIG. 2 is a diagram schematically showing a configuration of a safety start control device for a chainless electric bicycle according to a first exemplary embodiment of the present invention, FIG. 3 is a diagram schematically showing a configuration of a safety start control device for a chainless electric bicycle according to a second exemplary embodiment of the present invention, and FIG. 4 is a diagram schematically showing a configuration of a safety start control device for a chainless electric bicycle according to a third exemplary embodiment of the present invention.

First, as shown in FIG. 1, a chainless electric bicycle 100 may include a drive controller 110, a drive motor 120, a drive wheel 130, a wheel sensor 140, a driving mode changeover input unit 150, a generator 160, a pedal sensor 170, a battery 180, and a pedal 190. For example, the chainless electric bicycle may be a chainless electric bicycle for delivery and may include four drive wheels, but is not limited thereto.

The drive controller 110 generates current for driving the drive motor 120 based on a position and/or speed of the pedal 190 and a position and/or speed of the drive wheel 130. To this end, the drive controller 110 may include one or more processors and memories.

More specifically, the electric bicycle controls the motor so that the speed increases as the speed or torque of the pedal increases. To this end, the drive controller 110 generates current for controlling the motor based on a difference between the position or speed of the pedal 190 and the position or speed of the drive wheel 130.

That is, when using the speed of the pedal 190 and the speed of the drive wheel 130, the drive controller calculates a current for drive using a difference between the speed of the pedal 190 and the speed of the drive motor 120 connected to the drive wheel 130. In this case, the same gear ratio as that of a general bicycle may be considered, and a degree of assistance of the drive motor may be considered according to a driving mode.

The drive controller 110 may include at least a CPU and a memory. The drive controller 110 may further include an ADC (Analogue Digital Converter) in preparation for a case where an input signal is provided as an analog signal. For example, the drive controller 110 may be implemented with a microcontroller, a microprocessor, a microcomputer, an ASIC chip, or the like. In addition to a usual control logic for driving the drive motor 120 according to a rotating operation amount (speed setting value) of an accelerator, an application program in which a logic of the safe start control method described below is implemented is embedded in the memory. The CPU may execute the application program stored in the memory to perform a control for preventing an unintended start by stopping the drive of the drive motor 120 when it is predicted that an unintended start situation will occur while driving the drive motor 120.

The drive controller 110 may determine a stopped state of the bicycle 100 by detecting the speed of the drive wheel 130 sensed by the wheel sensor 140 and may switch to a driving standby mode. In particular, the drive controller determines that the drive wheel is in a stopped state if the detected speed of the drive wheel 130 satisfies a preset reference value, initializes a stop timer, and controls to switch to a driving standby mode state when a preset stop timer time elapses. This will be described in further detail below.

The drive motor 120 is connected to the drive wheel 130 and the drive controller 110 and supplies drive power to the drive wheel 130 under control of the drive controller 110.

The drive wheel 130 may be electrically connected to a pedal and driven only by the drive motor 120.

The wheel sensor 140 measures a position and/or a speed of the drive wheel 130.

The driving mode changeover input unit 150 receives a driving standby mode release signal from a rider in the driving standby mode switched by the drive controller 110. The various embodiments thereof will be described in detail below.

The generator 160 is connected to the pedal 190 to create a pedal load feeling similar to that of a bicycle including a chain, and can be controlled by classifying pedal feeling torque values for each torque region by the drive controller. For example, a speed at which a rider of a chainless electric bicycle turns a pedal is recognized to control the speed of the motor in proportion to the speed. No load is applied to the pedal because a chain is not connected to the pedal. Therefore, in order to create a pedal load feeling like a bicycle with a chain, the generator 160 connected to the pedal 190 is controlled accordingly. When the load of the pedal 190 is controlled according to the speed of the electric bicycle, the user feels a pedal feeling similar to that of a normal bicycle with a chain.

The pedal sensor 170 measures a position or speed of the pedal for rotating the generator 160.

The battery 180 serves as a main power source that supplies power necessary for driving the drive wheel 130 through the drive motor 120 and also supplies power to components requiring electricity, such as the drive controller 110 and the accelerator. The battery 180 may include a current sensor 181 that detects an amount of current supplied to the drive motor 120, a signal converter 182 that converts an analog signal of the detected amount of current into a digital signal, and a battery management system (BMS) 183 that is connected to the signal converter and calculates a value of instantaneous current applied to the motor based on the signal transmitted from the signal converter.

As shown in FIG. 2, a safety start control device 200 for a chainless electric bicycle according to a first exemplary embodiment of the present invention includes a drive controller 210, a driving mode changeover input unit 220, and a wheel sensor 230.

The drive controller 210 determines that the drive wheel is in a stopped state if the speed of the drive wheel detected by the wheel sensor 230 satisfies a preset reference value, initializes a stop timer, and switches to a driving standby mode state when a preset stop timer time elapses.

More specifically, the drive controller 210 may determine that the drive wheel is in a stopped state when the speed of the drive wheel detected by the wheel sensor 230 satisfies a value of 0 Km/h. Then, the drive controller waits until a preset stop timer time is reached after initializing the stop timer. For example, when the stop timer time is set to 5 minutes, the drive controller is in the drivable state for 5 minutes, but after 5 minutes, switches to the driving standby mode. In this case, the drive controller 210 controls the drive wheel not to be driven when a pedal input is applied in the driving standby mode state. For example, the controller 210 may control the motor 120 to remain in a non-driving, stopped state in which the motor 120 outputs no torque to the drive wheel 130.

For example, in the case where a chainless electric bicycle is used for delivery, there occurs the hassle of turning off and on the bicycle each time a rider delivers luggage in the middle of delivery. Accordingly, if the rider gets off the bicycle for a short period of time and then has to get on the bicycle, the rider gets on the bicycle with the power on of the chainless electric bicycle.

In this case, if the rider steps up on the pedal of the powered-on electric bicycle without holding the brake while the chainless electric bicycle for delivery is loaded with a heavy load of 100 kg or more, an input to the generator connected to the rider's pedal may cause a sudden start of the bicycle, contrary to the intention of the rider.

Therefore, the drive controller 210 prevents the unintentional start by controlling the drive wheel not to be driven when a pedal input is applied in the driving standby mode state.

The driving mode changeover input unit 220 receives a driving standby mode release signal from a rider in the driving standby mode state. Here, the driving mode changeover input unit 220 may include a brake lever 221 and a display unit 222.

The brake lever 221 can be used as an input unit for braking in a general driving mode, and can be applied to function as an input unit for releasing the driving standby mode.

More specifically, a rider's operation of gripping the brake lever 221 in the driving standby mode state can release the driving standby mode. For example, when the rider operates, e.g., presses or pulls, the brake lever 221 for a preset time or longer to release the driving standby mode, the driving standby mode state is switched to a drivable mode state.

The display unit 222 may display a driving speed and a driving mode changeover state of the chainless electric bicycle.

The wheel sensor 230 detects the speed of the drive wheel of the chainless electric bicycle in a powered-on and drivable state.

As shown in FIG. 3, a safety start control device 300 of a chainless electric bicycle according to a second exemplary embodiment of the present invention may include a drive controller 310, a driving mode changeover input unit 320, and a wheel sensor 330. Here, the detailed description of the configurations described with reference to the first exemplary embodiment will be omitted.

More specifically, the driving mode changeover input unit 320 according to the second exemplary embodiment may include a mode changeover switch 321, a brake lever 322 and a display unit 323.

When a driving standby mode release state is input to the mode changeover switch 321, the drive controller can be switched to the drivable mode state. Here, the mode changeover switch 321 may be configured in a part of a rider operation unit of the chainless electric bicycle.

Meanwhile, the brake lever 322 can be used as an input unit for braking in a general driving mode, and the display unit 323 can display the driving speed and driving mode changeover state of the chainless electric bicycle.

As shown in FIG. 4, the safety start control device 400 for a chainless electric bicycle according to the third exemplary embodiment of the present invention may include a drive controller 410, a communication module 420, a wheel sensor 430, a brake lever 440, and a display unit 450. Here, the detailed description of the configurations described with reference to the first exemplary embodiment will be omitted.

More specifically, in the third exemplary embodiment, the communication module 420 may be configured to release the driving standby mode.

The communication module 420 may be linked with a mobile terminal of a rider and receive a driving standby mode release signal from the rider. Here, the communication module 420 may use a Bluetooth module or an NFC module, but is not limited thereto.

For example, a driving mode changeover control application is installed on the mobile terminal of the rider, and when the mobile terminal comes close to the communication module 420 of the chainless electric bicycle within a predetermined distance range, the mobile terminal and the communication module are linked with each other and the communication module 420 receives a driving standby mode release signal input to the mobile terminal by the rider.

That is, the drive controller 410 switches to the drivable mode state when the communication module 420 receives a driving standby mode release signal.

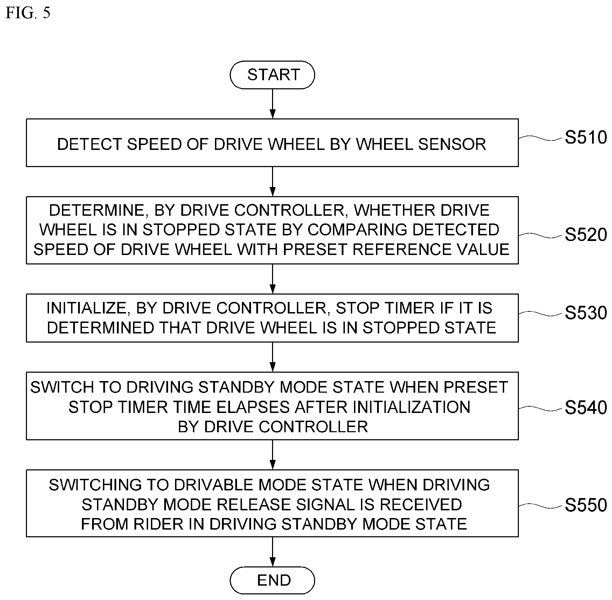

FIG. 5 is a flowchart of a safe start control method for a chainless electric bicycle according to the first exemplary embodiment of the present invention.

As shown in FIG. 5, a safe start control method for a chainless electric bicycle according to the first exemplary embodiment of the present invention includes performing a step (S510) of detecting, by a wheel sensor, a speed of a drive wheel. The method is carried out in a drive device of the electric bicycle which is in a powered on and drivable state. The method may be carried out, for example, using one of the device 200, 300 of Figs. 2 and 3.

The safe start control method includes subsequently performing a step (S520) of determining, by a drive controller, whether the drive wheel is in a stopped state by comparing the detected speed of the drive wheel with a preset reference value.

The drive controller 210 determines that the drive wheel is in a stopped state when the speed of the drive wheel detected by the wheel sensor satisfies a value of 0 Km/h.

The safe start control method includes subsequently performing a step (S530) of initializing, by the drive controller, a stop timer if it is determined that the drive wheel is in the stopped state. Here, the drive controller waits until a preset stop timer time is reached after initializing the stop timer.

The safe start control method includes subsequently performing a step (S540) of switching to a driving standby mode state when a preset stop timer time elapses after the initialization by the drive controller. For example, when the stop timer time is set to 5 minutes, the drive controller is in the drivable state for 5 minutes, but after 5 minutes, switches to the driving standby mode. In this case, the drive controller controls the drive wheel not to be driven when a pedal input is applied in the driving standby mode state.

The safe start control method includes subsequently performing a step (S550) of switching to a drivable mode state when a driving standby mode release signal is received from a rider in the driving standby mode state.

More specifically, in the driving standby mode state, a driving standby mode release signal is input and received from the rider. Here, the driving standby mode may be released by a rider's operation of gripping the brake lever in the driving standby mode state. For example, when the rider operates, e.g., presses or pulls, the brake lever for a preset time or longer to release the driving standby mode, the driving standby mode is switched to the drivable mode state.

When a driving standby mode release state is input to a mode changeover switch provided at a part of a rider operation unit of the chainless electric bicycle, the driving standby mode can be switched to the drivable mode state.

Meanwhile, the drive controller controls the drive wheel not to be driven when a pedal input is applied in the driving standby mode state.

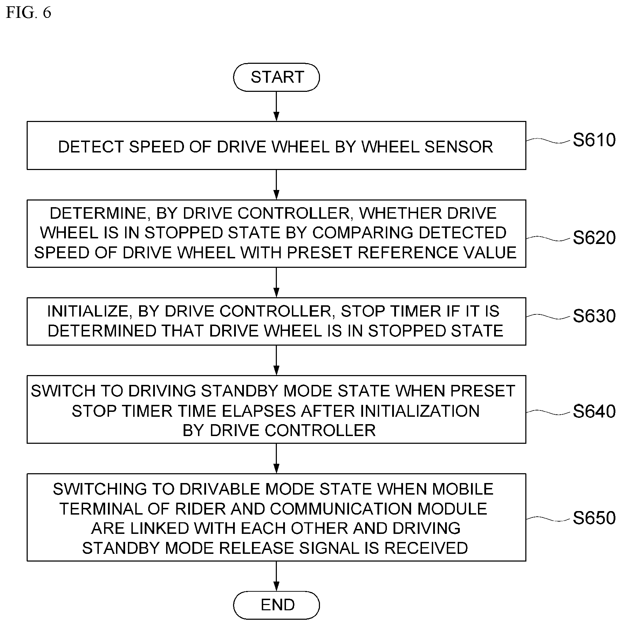

FIG. 6 is a flowchart of a safe start control method for a chainless electric bicycle according to the second exemplary embodiment of the present invention.

As shown in FIG. 6, a safe start control method for a chainless electric bicycle according to the second exemplary embodiment of the present invention includes performing a step (S610) of detecting, by a wheel sensor, a speed of a drive wheel. The method is carried out in a drive device of the electric bicycle which is in a powered on and drivable state. The method may, for example, be carried out using the device 400 of Fig. 4.

The safe start control method includes subsequently performing a step (S620) of determining, by a drive controller, whether the drive wheel is in a stopped state by comparing the detected speed of the drive wheel with a preset reference value. Here, the drive controller determines that the drive wheel is in a stopped state when the detected speed of the drive wheel satisfies a value of 0 Km/h.

The safe start control method includes subsequently performing a step (S630) of initializing, by the drive controller, a stop timer if it is determined that the drive wheel is in the stopped state. Here, the drive controller waits until a preset stop timer time is reached after initializing the stop timer.

The safe start control method includes subsequently performing a step (S640) of switching to a driving standby mode state when a preset stop timer time elapses after the initialization by the drive controller. For example, when the stop timer time is set to 5 minutes, the drive controller is in the drivable state for 5 minutes, but after 5 minutes, switches to the driving standby mode. In this case, the drive controller controls the drive wheel not to be driven when a pedal input is applied in the driving standby mode state.

The safe start control method includes subsequently performing a step (S650) of switching to a drivable mode state when a mobile terminal of a rider and a communication module are linked with each other and a driving standby mode release signal is received from the mobile terminal.

More specifically, the communication module may be linked with a mobile terminal of a rider and receive a driving standby mode release signal from the rider. Here, the communication module may use a Bluetooth module or an NFC module, but is not limited thereto.

For example, a driving mode changeover control application is installed on the mobile terminal of the rider, and when the mobile terminal comes close to the communication module of the chainless electric bicycle within a predetermined distance range, the mobile terminal and the communication module are linked with each other and the communication module receives a driving standby mode release signal input to the mobile terminal of the rider.

That is, the drive controller switches to the drivable mode state when the communication module receives the driving standby mode release signal.

Meanwhile, the drive controller controls the drive wheel not to be driven when a pedal input is applied in the driving standby mode state.

Therefore, even if a pedal input is inadvertently generated due to the rider's repetitive getting on and off operations in a drivable state in the drivable state in which the power of the chainless electric bicycle is turned on, an unintentional starting state is prevented to promote the rider's safety.

The above description of the present invention is for illustrative purposes, and those skilled in the art may understand that it can be easily modified into other specific forms. Therefore, the embodiments described above should be understood as illustrative in all respects and not limiting. For example, each component described as a single type may be implemented in a distributed manner, and similarly, the components described in the distributed manner may be implemented in a combined form.

## Claims

1. A safe start control device for a chainless electric bicycle comprising:
a wheel sensor (230; 330) configured to detect a speed of a drive wheel (130);
a drive controller (210;310) configured to determine that the drive wheel (130) is in a stopped state if the detected speed of the drive wheel (130) satisfies a preset reference value, to initialize a stop timer, and to switch to a driving standby mode state when a preset stop timer time elapses; and
a driving mode changeover input unit (220;320) configured to receive a driving standby mode release signal from a rider in the driving standby mode state,
wherein the drive controller (210;310) is configured to switch to a drivable mode state when the driving standby mode release signal is input to the driving mode changeover input unit.

2. The safe start control device of claim 1, wherein the driving mode changeover input unit (220; 320) is realized by a brake lever (221; 322) or a mode changeover switch (321),
wherein, when the brake lever (221; 322) is operated for a preset time or longer, the drive controller (210; 310) is switched to the drivable mode state, and
wherein, when a driving standby mode release state is input to the mode changeover switch (321), the drive controller (210 ;310) is switched to the drivable mode state.

3. The safe start control device of claim 1 or 2, wherein the drive controller (210; 310) is configured to control the drive wheel (130) not to be driven when a pedal input is applied in the driving standby mode state.

4. The safe start control device of any one of the preceding claims, wherein the drive controller (210; 310) is configured to determine that the drive wheel is in a stopped state, when the detected speed of the drive wheel satisfies a value of 0 Km/h,.

5. A safe start control device for a chainless electric bicycle (100), comprising:
a wheel sensor (430) configured to detect a speed of a drive wheel (130);
a drive controller (410) configured to determine that the drive wheel (130) is in a stopped state if the detected speed of the drive wheel (130) satisfies a preset reference value, to initialize a stop timer, and to switch to a driving standby mode state when a preset stop timer time elapses; and
a communication module (420) configured to be linked with a mobile terminal of a rider and to receive a driving standby mode release signal from the rider,
wherein the drive controller (410) is configured to switch to a drivable mode state when the driving standby mode release signal is received by the communication module(420).

6. The safe start control device of claim 5, wherein the communication module (420) is configured to establish a signal communication with the mobile terminal of the rider when the mobile terminal of the rider comes close to the communication module (420) within a predetermined distance range, so that the mobile terminal and the communication module (420) are linked with each other, and wherein the drive controller (410) is configured to switch to the drivable mode state input to the mobile terminal of the rider upon linking of the communication module (420) with the mobile terminal.

7. The safe start control device of claim 5 or 6, wherein the drive controller (410) is configured to control the drive wheel not to be driven when a pedal input is applied in the driving standby mode state.

8. The safe start control device of any one of claims 5 to 7, wherein the drive controller (410) is configured to determine that the drive wheel is in a stopped state when the detected speed of the drive wheel satisfies a value of 0 Km/h.

9. A safe start control method for a chainless electric bicycle (100) that includes a drive device being in a powered-on and drivable state, the method comprising:
detecting, by a wheel sensor (230; 330), a speed of a drive wheel (130) of the electric bicycle (100);
determining, by a drive controller (210; 310), whether the drive wheel is in a stopped state by comparing the detected speed of the drive wheel with a preset reference value;
initializing, by the drive controller(210;310), a stop timer if it is determined that the drive wheel is in the stopped state;
switching to a driving standby mode state when a preset stop timer time elapses after the initialization by the drive controller (210; 310); and
switching to a drivable mode state when a driving standby mode release signal is received from a rider in the driving standby mode state by the drive controller (210; 310).

10. The safe start control method of claim 9, wherein, in the step of switching to the drivable mode state,
the driving standby mode release signal is received from a brake lever (221; 322), and the switching to the drivable mode state is made when the brake lever(221;322) is operated for a preset time or longer, the switching to the drivable mode state is made, or
the driving standby mode release signal is received from a mode changeover switch (321), and the switching to the drivable mode state is made when a driving standby mode release is selected and input to the mode changeover switch (321).

11. The safe start control method of claim 9 or 10, wherein the drive controller (210; 310) controls the drive wheel (130) not to be driven when a pedal input is applied in the driving standby mode state.

12. The safe start control method of any one of claims 9 to 11, wherein in the determination as to whether the drive wheel (130) is in the stopped state, when the detected speed of the drive wheel satisfies a value of 0 Km/h, the drive wheel is determined as being in the stopped state.

13. A safe start control method for a chainless electric bicycle (100) that includes in a drive device being in a powered-on and drivable state, the method comprising:
detecting, by a wheel sensor (430), a speed of a drive wheel (130) of the electric bicycle (100);
determining, by a drive controller (410), whether the drive wheel (130) is in a stopped state by comparing the detected speed of the drive wheel with a preset reference value;
initializing, by the drive controller (410), a stop timer if it is determined that the drive wheel is in the stopped state;
switching to a driving standby mode state when a preset stop timer time elapses after the initialization by the drive controller (410); and
switching to a drivable mode state when a mobile terminal of a rider and a communication module are linked with each other and a driving standby mode release signal is received from the rider.

14. The safe start control method of claim 13, wherein, when the mobile terminal of the rider comes close to the communication module (420) within a predetermined distance range, the communication module (420) establishes a signal communication with the mobile terminal, so that the mobile terminal and the communication module (420) are linked with each other, and wherein the switching to the drivable mode state input to the mobile terminal of the rider is made upon linking of the communication module (420) with the mobile terminal.

15. The safe start control method of claim 13 or 14, wherein the drive controller (410) controls the drive wheel (130) not to be driven when a pedal input is applied in the driving standby mode state.

## Patentansprüche

1. Vorrichtung zur sicheren Startsteuerung für ein kettenloses elektrisches Fahrrad, umfassend:
einen Radsensor (230; 330), der so konfiguriert ist, dass er eine Geschwindigkeit eines Antriebsrades (130) erfasst;
eine Antriebssteuerung (210; 310), die so konfiguriert ist, dass sie bestimmt, dass sich das Antriebsrad (130) in einem angehaltenen Zustand befindet, wenn die erfasste Geschwindigkeit des Antriebsrades (130) einem voreingestellten Referenzwert entspricht, einen Stopp-Timer initialisiert und in einen Fahrbereitschaftsmoduszustand schaltet, wenn eine voreingestellte Stopp-Timer-Zeit abgelaufen ist, und
eine Fahrmoduswechsel-Eingabeeinheit (220; 320), die so konfiguriert ist, dass sie ein Fahrbereitschaftsmodus-Freigabesignal von einem Fahrer im Fahrbereitschaftsmoduszustand empfängt,
wobei die Antriebssteuerung (210; 310) so konfiguriert ist, dass sie in einen fahrbereiten Moduszustand schaltet, wenn das Fahrbereitschaftsmodus-Freigabesignal in die Fahrmoduswechsel-Eingabeeinheit eingegeben ist.

2. Vorrichtung zur sicheren Startsteuerung nach Anspruch 1, wobei die Fahrmoduswechsel-Eingabeeinheit (220; 320) durch einen Bremshebel (221; 322) oder einen Moduswechselschalter (321) realisiert ist,
wobei die Antriebssteuerung (210; 310) in den fahrbereiten Moduszustand geschaltet wird, wenn der Bremshebel (221; 322) für eine voreingestellte Zeit oder länger betätigt wird, und
wobei die Antriebssteuerung (210; 310) in den fahrbereiten Moduszustand geschaltet wird, wenn ein Fahrbereitschaftsmodus-Freigabezustand in den Moduswechselschalter (321) eingegeben wird.

3. Vorrichtung zur sicheren Startsteuerung nach Anspruch 1 oder 2, wobei die Antriebssteuerung (210; 310) so konfiguriert ist, dass sie das Antriebsrad (130) so steuert, dass es nicht angetrieben wird, wenn im Fahrbereitschaftsmoduszustand eine Pedaleingabe erfolgt.

4. Vorrichtung zur sicheren Startsteuerung nach einem der vorangehenden Ansprüche, wobei die Antriebssteuerung (210; 310) so konfiguriert ist, dass sie bestimmt, dass sich das Antriebsrad in einem angehaltenen Zustand befindet, wenn die erfasste Geschwindigkeit des Antriebsrades einem Wert von 0 km/h entspricht.

5. Vorrichtung zur sicheren Startsteuerung für ein kettenloses elektrisches Fahrrad (100), umfassend:
einen Radsensor (430), der so konfiguriert ist, dass er eine Geschwindigkeit eines Antriebsrades (130) erfasst;
eine Antriebssteuerung (410), die so konfiguriert ist, dass sie bestimmt, dass sich das Antriebsrad (130) in einem angehaltenen Zustand befindet, wenn die erfasste Geschwindigkeit des Antriebsrades (130) einem voreingestellten Referenzwert entspricht, einen Stopp-Timer initialisiert und in einen Fahrbereitschaftsmoduszustand schaltet, wenn eine voreingestellte Stopp-Timer-Zeit abgelaufen ist; und
ein Kommunikationsmodul (420), das so konfiguriert ist, dass es mit einem mobilen Endgerät eines Fahrers verbunden ist und ein Fahrbereitschaftsmodus-Freigabesignal von dem Fahrer empfängt,
wobei die Antriebssteuerung (410) so konfiguriert ist, dass sie in einen fahrbereiten Moduszustand schaltet, wenn das Fahrbereitschaftsmodus-Freigabesignal durch das Kommunikationsmodul (420) empfangen wird.

6. Vorrichtung zur sicheren Startsteuerung nach Anspruch 5, wobei das Kommunikationsmodul (420) so konfiguriert ist, dass es eine Signalkommunikation mit dem mobilen Endgerät des Fahrers herstellt, wenn sich das mobile Endgerät des Fahrers dem Kommunikationsmodul (420) innerhalb eines vorbestimmten Abstandsbereichs nähert, so dass das mobile Endgerät und das Kommunikationsmodul (420) miteinander verbunden sind, und wobei die Antriebssteuerung (410) so konfiguriert ist, dass sie beim Verbinden des Kommunikationsmoduls (420) mit dem mobilen Endgerät in den fahrbereiten Moduszustand schaltet, der in das mobile Endgerät des Fahrers eingegeben wird.

7. Vorrichtung zur sicheren Startsteuerung nach Anspruch 5 oder 6, wobei die Antriebssteuerung (410) so konfiguriert ist, dass sie das Antriebsrad so steuert, dass es nicht angetrieben wird, wenn im Fahrbereitschaftsmoduszustand eine Pedaleingabe erfolgt.

8. Vorrichtung zur sicheren Startsteuerung nach Anspruch 5 oder 7, wobei die Antriebssteuerung (410) so konfiguriert ist, dass sie bestimmt, dass sich das Antriebsrad in einem angehaltenen Zustand befindet, wenn die erfasste Geschwindigkeit des Antriebsrades einem Wert von 0 km/h entspricht.

9. Verfahren zur sicheren Startsteuerung für ein kettenloses elektrisches Fahrrad (100), das eine Antriebsvorrichtung beinhaltet, die sich in einem eingeschalteten und fahrbereiten Zustand befindet, wobei das Verfahren umfasst:
Erfassen einer Geschwindigkeit eines Antriebsrades (130) des elektrischen Fahrrades (100) durch einen Radsensor (230; 330);
Bestimmen durch eine Antriebssteuerung (210; 310), ob sich das Antriebsrad in einem angehaltenen Zustand befindet, indem die erfasste Geschwindigkeit des Antriebsrades mit einem voreingestellten Referenzwert verglichen wird;
Initialisieren eines Stopp-Timers durch die Antriebssteuerung (210; 310), wenn bestimmt wird, dass sich das Antriebsrad in dem angehaltenen Zustand befindet;
Schalten in einen Fahrbereitschaftsmoduszustand, wenn nach der Initialisierung durch die Antriebssteuerung (210; 310) eine voreingestellte Stopp-Timer-Zeit abgelaufen ist; und
Schalten in einen fahrbereiten Moduszustand, wenn ein Fahrbereitschaftsmodus-Freigabesignal im Fahrbereitschaftsmoduszustand von einem Fahrer durch die Antriebssteuerung (210; 310) empfangen wird.

10. Verfahren zur sicheren Startsteuerung nach Anspruch 9, wobei in dem Schritt des Schaltens in den fahrbereiten Moduszustand
das Fahrbereitschaftsmodus-Freigabesignal von einem Bremshebel (221; 322) empfangen wird und das Schalten in den fahrbereiten Moduszustand erfolgt, wenn der Bremshebel (221; 322) für eine voreingestellte Zeit oder länger betätigt wird, wobei das Schalten in den fahrbereiten Moduszustand erfolgt, oder
das Fahrbereitschaftsmodus-Freigabesignal von einem Moduswechselschalter (321) empfangen wird, und das Schalten in den fahrbereiten Moduszustand erfolgt, wenn eine Fahrbereitschaftsmodusfreigabe ausgewählt und in den Moduswechselschalter (321) eingegeben wird.

11. Verfahren zur sicheren Startsteuerung nach Anspruch 9 oder 10, wobei die Antriebssteuerung (210; 310) das Antriebsrad (130) so steuert, dass es nicht angetrieben wird, wenn im Fahrbereitschaftsmoduszustand eine Pedaleingabe erfolgt.

12. Verfahren zur sicheren Startsteuerung nach einem der Ansprüche 9 bis 11, wobei bei der Bestimmung, ob sich das Antriebsrad (130) in dem angehaltenen Zustand befindet, wenn die erfasste Geschwindigkeit des Antriebsrades einem Wert von 0 km/h entspricht, bestimmt wird, dass sich das Antriebsrad in dem angehaltenen Zustand befindet.

13. Verfahren zur sicheren Startsteuerung für ein kettenloses elektrisches Fahrrad (100), das eine Antriebsvorrichtung beinhaltet, die sich in einem eingeschalteten und fahrbereiten Zustand befindet, wobei das Verfahren umfasst:
Erfassen einer Geschwindigkeit eines Antriebsrades (130) des elektrischen Fahrrades (100) durch einen Radsensor (430);
Bestimmen durch eine Antriebssteuerung (410), ob sich das Antriebsrad (130) in einem angehaltenen Zustand befindet, indem die erfasste Geschwindigkeit des Antriebsrades mit einem voreingestellten Referenzwert verglichen wird;
Initialisieren eines Stopp-Timers durch die Antriebssteuerung (410), wenn bestimmt wird, dass sich das Antriebsrad in einem angehaltenen Zustand befindet;
Schalten in einen Fahrbereitschaftsmoduszustand, wenn nach der Initialisierung durch die Antriebssteuerung (410) eine voreingestellte Stopp-Timer-Zeit abgelaufen ist; und
Schalten in einen fahrbereiten Moduszustand, wenn ein mobiles Endgerät eines Fahrers und ein Kommunikationsmodul miteinander verbunden sind und ein Fahrbereitschaftsmodus-Freigabesignal von dem Fahrer empfangen wird.

14. Verfahren zur sicheren Startsteuerung nach Anspruch 13, wobei das Kommunikationsmodul (420), wenn sich das mobile Endgerät des Fahrers innerhalb eines vorbestimmten Abstandsbereichs dem Kommunikationsmodul (420) nähert, eine Signalkommunikation mit dem mobilen Endgerät herstellt, so dass das mobile Endgerät und das Kommunikationsmodul (420) miteinander verbunden werden, und wobei das Schalten in den fahrbereiten Moduszustand, der in das mobile Endgerät des Fahrers eingegeben ist, bei Verbinden des Kommunikationsmoduls (420) mit dem mobilen Endgerät erfolgt.

15. Verfahren zur sicheren Startsteuerung nach Anspruch 13 oder 14, wobei die Antriebssteuerung (410) das Antriebsrad (130) so steuert, dass es nicht angetrieben wird, wenn in dem Fahrbereitschaftsmoduszustand eine Pedaleingabe erfolgt.

## Revendications

1. Dispositif de commande de démarrage sécurisé pour une bicyclette électrique sans chaîne, comprenant :
un capteur de roue (230 ; 330) prévu pour détecter la vitesse d'une roue motrice (130) ;
un contrôleur d'entraînement (210 ; 310) prévu pour déterminer que la roue motrice (130) est en état d'arrêt si la vitesse de roue motrice (130) détectée satisfait à une valeur de référence prédéfinie, pour initialiser un temporisateur d'arrêt, et pour commuter vers un mode de veille d'entraînement après écoulement d'un temps de temporisateur d'arrêt prédéfini ; et
une unité d'entrée de commutation de mode d'entraînement (220 ; 320) prévue pour recevoir un signal de libération de mode de veille d'entraînement provenant d'un conducteur en état de mode de veille d'entraînement,
où le contrôleur d'entraînement (210 ; 310) est prévu pour commuter vers un état de mode pilotable lorsque le signal de libération de mode de veille d'entraînement est entré dans l'unité d'entrée de commutation de mode d'entraînement.

2. Dispositif de commande de démarrage sécurisé selon la revendication 1, où l'unité d'entrée de commutation de mode d'entraînement (220 ; 320) est réalisée par un levier de frein (221 ; 322) ou un commutateur de mode (321),
où, lorsque le levier de frein (221 ; 322) est utilisé pendant au moins une durée prédéfinie, le contrôleur d'entraînement (210 ; 310) est commuté vers l'état de mode pilotable, et
où, lorsqu'un état de libération de mode de veille d'entraînement est entré dans le commutateur de mode (321), le contrôleur d'entraînement (210 ;310) est commuté vers l'état de mode pilotable.

3. Dispositif de commande de démarrage sécurisé selon la revendication 1 ou la revendication 2, où le contrôleur d'entraînement (210 ; 310) est prévu pour commander l'arrêt d'entraînement de la roue motrice (130) lorsqu'une entrée de pédale est appliquée en état de mode de veille d'entraînement.

4. Dispositif de commande de démarrage sécurisé selon l'une des revendications précédentes, où le contrôleur d'entraînement (210 ; 310) est prévu pour déterminer que la roue motrice est en état d'arrêt, lorsque la vitesse de roue motrice détectée satisfait à une valeur de 0 km/h.

5. Dispositif de commande de démarrage sécurisé pour une bicyclette électrique sans chaîne (100), comprenant :
un capteur de roue (430) prévu pour détecter la vitesse d'une roue motrice (130) ;
un contrôleur d'entraînement (410) prévu pour déterminer que la roue motrice (130) est en état d'arrêt si la vitesse de roue motrice (130) détectée satisfait à une valeur de référence prédéfinie, pour initialiser un temporisateur d'arrêt, et pour commuter vers un mode de veille d'entraînement après écoulement d'un temps de temporisateur d'arrêt prédéfini ; et
un module de communication (420) prévu pour être relié à un terminal mobile d'un conducteur et pour recevoir un signal de libération de mode de veille d'entraînement provenant du conducteur,
où le contrôleur d'entraînement (410) est prévu pour commuter vers un état de mode pilotable lorsque le signal de libération de mode de veille d'entraînement est reçu par le module de communication (420).

6. Dispositif de commande de démarrage sécurisé selon la revendication 5, où le module de communication (420) est prévu pour établir une communication par signaux avec le terminal mobile du conducteur lorsque le terminal mobile du conducteur se rapproche du module de communication (420) dans une plage de distance prédéterminée, de sorte que le terminal mobile et le module de communication (420) se connectent l'un à l'autre, et où le contrôleur d'entraînement (410) est prévu pour commuter vers l'état de mode pilotable entré dans le terminal mobile du conducteur par connexion du module de communication (420) avec le terminal mobile.

7. Dispositif de commande de démarrage sécurisé selon la revendication 5 ou la revendication 6, où le contrôleur d'entraînement (410) est prévu pour commander l'arrêt d'entraînement de la roue motrice lorsqu'une entrée de pédale est appliquée en état de mode de veille d'entraînement.

8. Dispositif de commande de démarrage sécurisé selon l'une des revendications 5 à 7, où le contrôleur d'entraînement (410) est prévu pour déterminer que la roue motrice est en état d'arrêt, lorsque la vitesse de roue motrice détectée satisfait à une valeur de 0 km/h.

9. Procédé de commande de démarrage sécurisé pour une bicyclette électrique sans chaîne (100) comprenant un dispositif d'entraînement en état d'alimentation et pilotable, ledit procédé comprenant :
la détection, par un capteur de roue (230 ; 330), d'une vitesse d'une roue motrice (130) de la bicyclette électrique (100) ;
la détermination, par un contrôleur d'entraînement (210 ; 310), si la roue motrice est en état d'arrêt par comparaison de la vitesse de roue motrice détectée avec une valeur de référence prédéfinie ;
l'initialisation, par le contrôleur d'entraînement (210 ; 310), d'un temporisateur d'arrêt s'il est déterminé que la roue motrice est en état d'arrêt ;
la commutation vers un état de mode de veille d'entraînement après écoulement d'un temps de temporisateur d'arrêt prédéfini suivant l'initialisation par le contrôleur d'entraînement (210 ; 310) ; et
la commutation vers un état de mode pilotable lorsqu'un signal de libération de mode de veille d'entraînement est reçu d'un conducteur en état de mode de veille d'entraînement par le contrôleur d'entraînement (210 ; 310).

10. Procédé de commande de démarrage sécurisé selon la revendication 9, où, lors de l'étape de commutation vers l'état de mode pilotable,
le signal de libération de mode de veille d'entraînement est reçu d'un levier de frein (221 ; 322), et la commutation vers l'état de mode pilotable est effectuée lorsque le levier de frein (221 ; 322) est actionné pendant au moins une durée prédéfinie, et la commutation vers l'état de mode pilotable est effectuée, ou
le signal de libération de mode de veille d'entraînement est reçu d'un commutateur de mode (321), et la commutation vers l'état de mode pilotable est effectuée lorsqu'une libération de mode de veille d'entraînement est sélectionnée et entrée dans le commutateur de mode (321).

11. Procédé de commande de démarrage sécurisé selon la revendication 9 ou la revendication 10, où le contrôleur d'entraînement (210 ; 310) l'arrêt d'entraînement de la roue motrice (130) lorsqu'une entrée de pédale est appliquée en état de mode de veille d'entraînement.

12. Procédé de commande de démarrage sécurisé selon l'une des revendications 9 à 11, où, lors de la détermination si la roue motrice (130) est en état d'arrêt, si la vitesse de roue motrice détectée satisfait à une valeur de 0 km/h, il est déterminé que la roue motrice est en état d'arrêt.

13. Procédé de commande de démarrage sécurisé pour une bicyclette électrique sans chaîne (100) comprenant un dispositif d'entraînement en état d'alimentation et pilotable, ledit procédé comprenant :
la détection, par un capteur de roue (430), de la vitesse d'une roue motrice (130) de la bicyclette électrique (100) ;
la détermination, par un contrôleur d'entraînement (410), si la roue motrice (130) est en état d'arrêt par comparaison de la vitesse de roue motrice détectée avec une valeur de référence prédéfinie ;
l'initialisation, par le contrôleur d'entraînement (410), d'un temporisateur d'arrêt s'il est déterminé que la roue motrice est en état d'arrêt ;
la commutation vers un état de mode de veille d'entraînement après écoulement d'un temps de temporisateur d'arrêt prédéfini suivant l'initialisation par le contrôleur d'entraînement (410) ; et
la commutation vers un état de mode pilotable lorsqu'un terminal mobile d'un conducteur et un module de communication sont connectés l'un à l'autre et qu'un signal de libération de mode de veille d'entraînement est reçu du conducteur.

14. Procédé de commande de démarrage sécurisé de la revendication 13, où, lorsque le terminal mobile du conducteur s'approche du module de communication (420) dans une plage de distance prédéterminée, le module de communication (420) établit une communication par signaux avec le terminal mobile, de sorte que le terminal mobile et le module de communication (420) se connectent l'un à l'autre, et où la commutation vers l'état de mode pilotable entrée dans le terminal mobile du conducteur est effectuée par connexion du module de communication (420) avec le terminal mobile.

15. Procédé de commande de démarrage sécurisé selon la revendication 13 ou la revendication 14, où le contrôleur d'entraînement (410) commande l'arrêt d'entraînement de la roue motrice (130) lorsqu'une entrée de pédale est appliquée en état de mode de veille d'entraînement.
